# EUROPEAN PATENT APPLICATION

(11) **EP 1 894 781 A1**
(43) Date of publication of application: **05.03.2008**
(21) Application number: 07008696.2
(22) Date of filing: 27.04.2007
(51) Int. Cl.: B60R 1/06

(54) **Wiper for an automobile rearview mirror**

(30) Priority: 29.08.2006 CN 200610111857
(71) Applicant: Lin, Chiang-Fen, Yongkang City Tainan County (TW)
(72) Inventor: Lin, Chiang-Fen, Yongkang City Tainan County (TW)
(74) Representative: Volpert, Marcus

(57) **Abstract**

A wiper for an automobile rearview mirror includes a transmitting device (2), an elongate connect rod (3) fixed on the rotary shaft (20) lengthwise, and an elongate wiper (4). The transmitting device (2) is fixed on a rear surface of a base (10) of a rearview mirror (1), having a rotary shaft (20) positioned on the front surface of the base (1) and driven by the transmitting device (2) to swing up and down on the surface of the mirror body (11). The wiper (4) is wrapped around the connect rod (3), so the wiper (4), the connect rod (3) and rotary shaft (20) are moved together by the transmitting device (2). The base (10) has a circumferential stop edge (12) on the circumference for stopping the wiper (4), and when the wiper (4) is swung to reach the upper or the lower stop edge of the base (10), it can reversely be swung to reciprocate up and down to wipe raindrops on the surface of the mirror body (11).

## Description

### BACKGROUND OF THE INVENTION

### 1. Field of the Invention

This invention relates a wiper for an automobile rearview mirror, particularly to one provided with a wiper to swing up and down on the mirror body fixed on a base formed with a circumferential stop edge for stopping the wiper body so as to force the wiper body to swing up and down after stopped by the circumferential stop edge.

### 2. Description of the Prior Art

In driving an automobile, a driver has to always look at the right and the left rearview mirror to check traffic conditions so that he/he can make a turn, overtake, change a lane or park the automobile. As the rearview mirror is located outside the automobile, raindrops may remain on the surface of the rearview mirror, blurring it so the driver cannot see clearly the surface of the rearview mirror. Therefore it is impossible for the driver to drive safely.

### SUMMARY OF THE INVENTION

The purpose of the invention is to offer a wiper for an automobile rearview mirror possible to be bent elastically along an upper stop edge or a lower stop edge formed on the circumference of a base of a rearview mirror when the wiper is swung up and down by a rotary shaft of a transmitting device fixed on a rear surface of the base.

The feature of the invention is the circumferential stop edge of the base, which forces the wiper to move along the stop edge and bend when the wiper moves on the mirror surface so that the wiper may completely remove raindrops thereon.

### BRIEF DESCRIPTION OF DRAWINGS

This invention will be better understood by referring to the accompanying drawings, wherein:
Figure 1 is a perspective front view of a rearview mirror with a wiper in the present invention;
Figure 2 is a perspective rear view of the rearview mirror with the wiper in the present invention;
Figure 3 is a front view of the wiper for an automobile rearview mirror in the present invention, showing it under a first moving condition;
Figure 4 is a front view of the wiper for an automobile rearview mirror in the present invention, showing it under a second moving condition; and,
Figure 5 is a front view of the wiper for an automobile rearview mirror in the present invention, showing it under a third moving condition.

### DETAILED DESCRIPTION OF THE PREFERRED EMBODIMENT

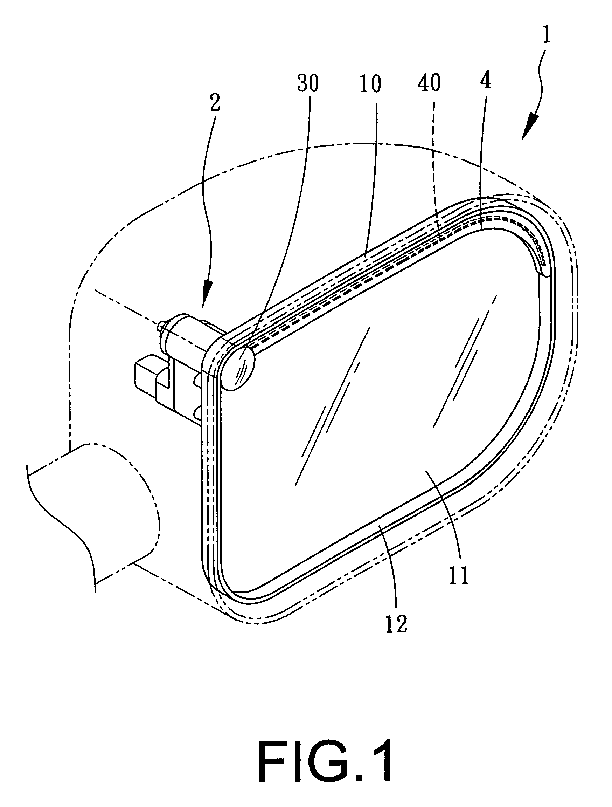

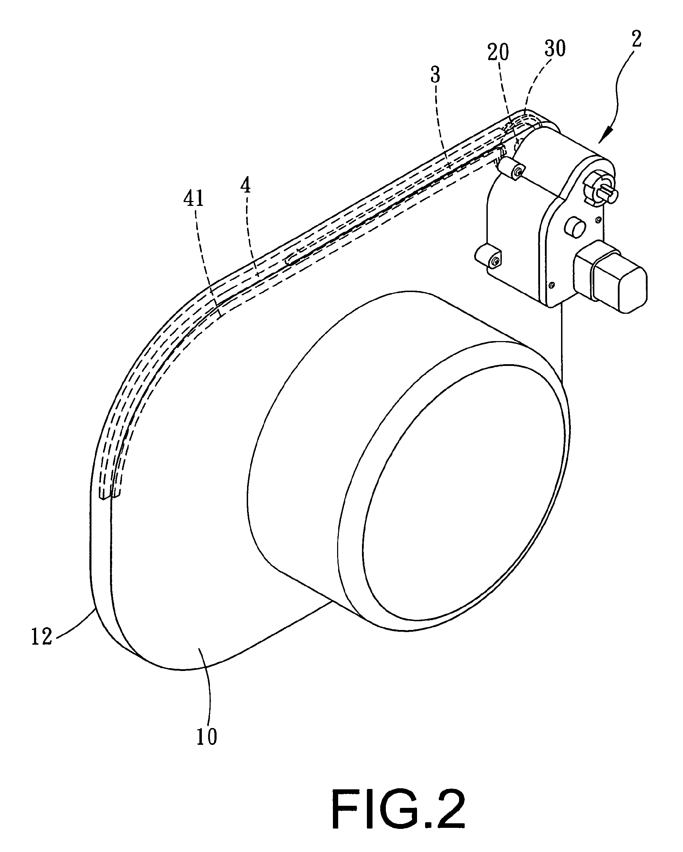

A preferred embodiment of a wiper for an automobile rearview mirror in the present invention, as shown in Figs. 1, 2 and 3, includes a rearview mirror 1, a transmitting device 2, a connect rod 3 and a wiper 4 as main components combined together.

The rearview mirror 1 consists of a base 10 and a mirror body 11 fixed on the base 10 and a circumferential stop edge 12 formed around the circumference of the base 10.

The transmitting device 2 is installed on a rear side of the base 10, composed of a rotary shaft 20 positioned on the surface of the mirror body 11.

The elongate connect rod 3 is fixed on the rotary shaft 20, moving together with the rotary shaft 20 when the rotary shaft 20 is swung by a motor. A fixing member 30 is provided on the rotary shaft 20, fixing the connecting rod 3 to the rotary shaft 20.

The elongate wiper 4 is made of soft material, wrapped around the connect rod 3, and longer than the connect rod 3, and an elastic member 40 is placed inside the wiper 4, making the wiper flexible to bend freely. The wiper 4 has a wiping surface 41 closely contacting the surface of the mirror body 11.

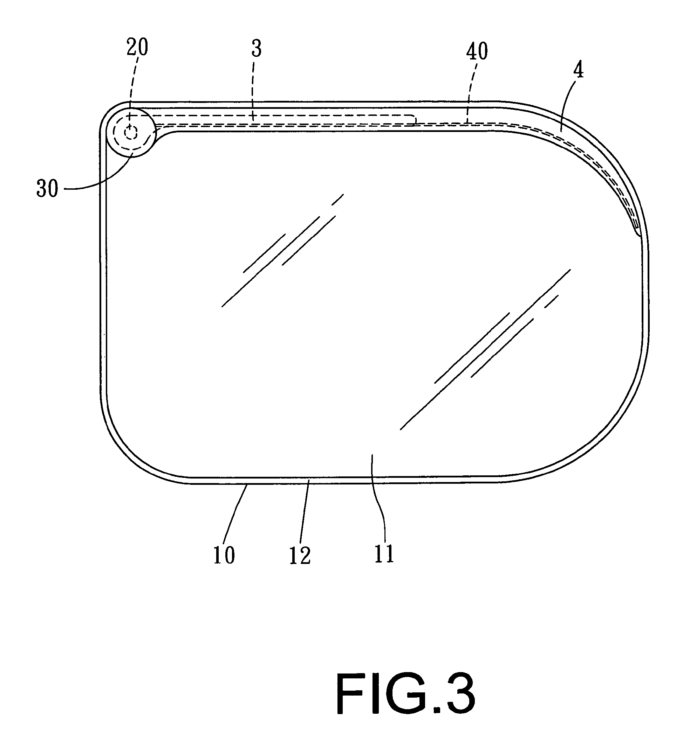

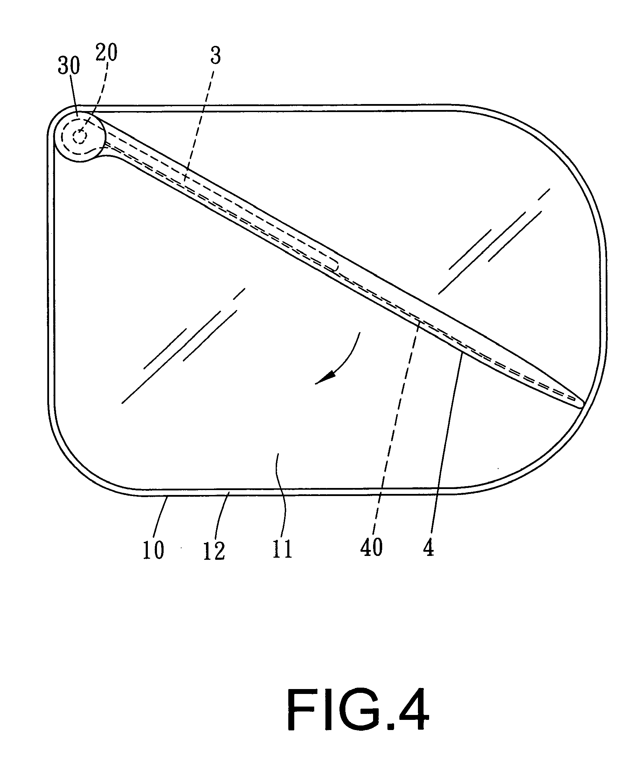

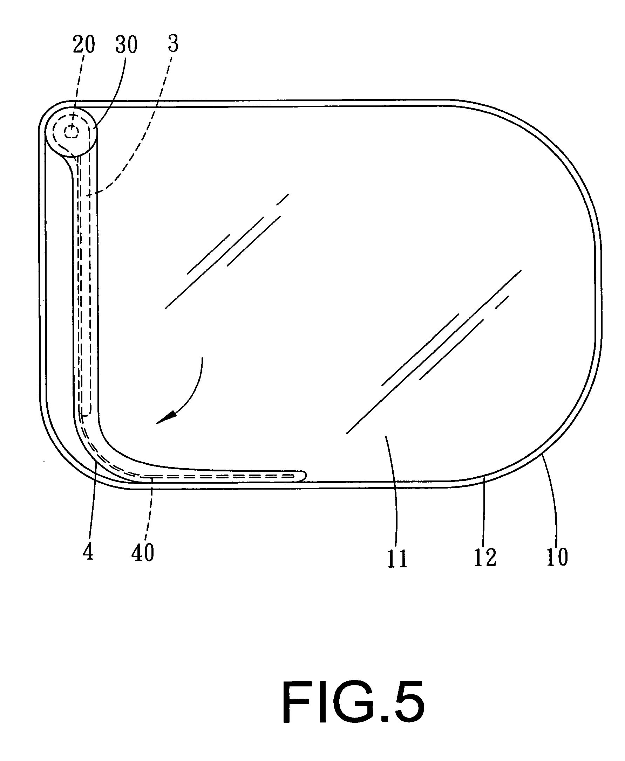

Next, as shown in Figs. 3, 4 and 5, the wiper 4 is to be used for cleaning raindrops on the mirror body 11, the transmitting device 2 is started to swing the rotary shaft 20, which then forces the connect rod 3 to swing together, so the wiper 4 is also swung together with the connect rod 3. Meanwhile during swinging of the wiper 4, the wiper 4 located in a bent condition at an upper stop edge of the circumferential stop edge 12 of the base 10 is swung down, the wiper 4 may straighten up because of the elastic member 40, as shown in Fig. 4. When the wiper 4 moves to reach a lower stop edge of the circumferential stop edge 12 of the base 10, the wiper 4 is to be stopped by and bent along the lower stop edge of the circumferential stop edge 12 shaped convex owing to the elasticity of the elastic member 40, as shown in Fig. 5. At that moment, the rotary shaft 20 can be forced to swing reversely by the transmitting device 2, with the wiper 4 is also swung in the opposite direction (or reversely), i. e. swinging up toward the upper stop edge of the circumferential stop edge 12 of the base 10, with the wiping surface 41 moving on the surface of the mirror body 11, cleaning off raindrops thereon. If the wiper 4 reaches the upper stop edge of the circumferential stop edge 12 of the base 10, the wiper 4 is to be stopped by the upper stop edge of the circumferential stop edge 12 and forced to swing down by means of the rotary shaft 20 driven by the transmitting device 2. In this way, raindrops may be cleaned off the mirror body 11, if there is any.

While the preferred embodiment of the invention has been described above, it will be recognized and understood that various modifications may be made therein and the appended claims are intended to cover all such modifications that may fall within the spirit and scope of the invention.

## Claims

1. A wiper for an automobile rearview mirror comprising a transmitting device (2) provided with a rotary shaft (20) positioned on a rear surface of a base (10) of a rearview mirror (1), a mirror body (11) fixed on a front surface of said base (10), an elongate connect rod (3) fixed lengthwise on said rotary shaft (20) to move together, an elongate wiper (4) wrapped around said connect rod (3), an elastic member (40) deposited in said wiper (4) to enable said wiper (4) to bend elastically, said wiper (4) having a wiping surface (41) contacting the surface of said mirror body (11); and,
**characterized by** said base (10) provided with a circumferential stop edge (12) formed on an outer circumference to force said wiper (4) to move along said circumferential stop edge (12) and bend when said wiper (4) is moved on the surface of said mirror body (11) so that said wiper (4) may completely remove raindrops thereon.
